# EUROPEAN PATENT APPLICATION

(11) **EP 4 585 566 A1**
(43) Date of publication of application: **16.07.2025**
(21) Application number: 24219065.0
(22) Date of filing: 11.12.2024
(51) Int. Cl.: C01G 53/42, C01G 53/506, H01M 4/525

(54) **POSITIVE ELECTRODE ACTIVE MATERIAL FOR RECHARGEABLE LITHIUM BATTERIES, METHOD OF PREPARING THE SAME, AND RECHARGEABLE LITHIUM BATTERY INCLUDING THE SAME**

(30) Priority: 11.12.2023 KR 20230178972
(71) Applicant: SAMSUNG SDI CO., LTD., Yongin-si, Gyeonggi-do 17084 (KR)
(72) Inventor: SON, Jung Woo, 16678 Suwon-si (KR); YOO, Hee Won, 16678 Suwon-si (KR); KWON, Seon Young, 16678 Suwon-si (KR); LEE, Chang Jin, 16678 Suwon-si (KR)
(74) Representative: Marks & Clerk LLP

(57) **Abstract**

A positive electrode active material for rechargeable lithium batteries, a method of preparing the same, and a rechargeable lithium battery including the same are disclosed. The positive electrode active material includes: a nickel-based active material; a cobalt-containing coating layer on a surface of the nickel-based active material; and a boron-containing coating layer on a surface of the cobalt-containing coating layer, wherein the positive electrode active material has a specific surface area of 0.45 m²/g to 0.60 m²/g.

## Description

### BACKGROUND

### 1. Field

The present disclosure relates to a positive electrode active material for rechargeable lithium batteries, a method of preparing the same, and a rechargeable lithium battery including the same.

### 2. Description of the Related Art

In recent years, demand for high energy density and high capacity secondary batteries has grown rapidly with the rapid spread of battery-powered electronic devices, such as mobile phones, notebook computers, and electric vehicles. Thus, research and development has been actively conducted to improve the performance of rechargeable lithium batteries.

A rechargeable lithium battery includes a positive electrode and a negative electrode, each containing active materials capable of allowing intercalation and deintercalation of lithium ions, and an electrolyte. The rechargeable lithium battery produces electricity through oxidation and reduction reactions if (e.g., when) lithium ions are intercalated into and deintercalated from the positive electrode and the negative electrode.

A nickel-based active material may be used as a positive electrode active material for rechargeable lithium batteries. Because the nickel-based active material can suffer from deterioration in performance due to intergranular growth and side reaction with an electrolyte during charge and discharge, there is a need for improvement in performance of the nickel-based active material.

### SUMMARY

An aspect according to one or more embodiments of the present disclosure is directed toward a positive electrode active material for rechargeable lithium batteries that secures (e.g., ensures) excellent improvement in high temperature life while suppressing ignition through increase in outgassing amount if (e.g., when) overcharged to 4.8 V or more.

An aspect according to one or more embodiments of the present disclosure is directed toward a positive electrode active material for rechargeable lithium batteries that secures (e.g., ensures) increased charge and discharge efficiency, improved capacity, suppression of side reaction, such as outgassing, and reduction in resistance.

An aspect according to one or more embodiments of the present disclosure is directed toward a method of preparing the positive electrode active material for rechargeable lithium batteries.

An aspect according to one or more embodiments of the present disclosure is directed toward a rechargeable lithium battery including the positive electrode active material for rechargeable lithium batteries as described above.

Additional aspects will be set forth in part in the description which follows and, in part, will be apparent from the description, or may be learned by practice of the presented embodiments of the disclosure.

According to one or more embodiments of the present disclosure, a positive electrode active material for rechargeable lithium batteries includes: a nickel-based active material; a cobalt-containing coating layer on a surface of the nickel-based active material; and a boron-containing coating layer on a surface of the cobalt-containing coating layer, wherein the positive electrode active material has a specific surface area of 0.45 m²/g to 0.60 m²/g.

In some embodiments, the nickel-based active material may be a nickel-based active material represented by Formula 1:

Liₐ(Ni_{1-x-y-z}COₓM_{y}M'_{z})O_{2-δ},

where M denotes at least one selected from among Mn and Al;
M' denotes at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al); and
a, x, y, z, and δ satisfy relations: 0.95≤a≤1.3, x≤(1-x-y-z), y≤(1-x-y-z), z≤(1-x-y-z), 0<x<1, 0≤y<1, 0≤z<1, and 1.98≤2-δ≤2.

In some embodiments, the boron-containing coating layer may be integrally formed with the cobalt-containing coating layer.

In some embodiments, the positive electrode active material may have a nickel content of 70 mol% or more.

In some embodiments, the nickel-based active material may include a secondary particle through physical and/or chemical agglomeration of primary particles.

In some embodiments, the cobalt-containing coating layer may be present on a surface of the secondary particle and at grain boundaries of the primary particles.

In some embodiments, the nickel-based active material may include at least one of (i) a first secondary particle, (ii) a single crystal structure particle, or (iii) a one-body particle.

In some embodiments, the nickel-based active material may be a mixture of (i) the first secondary particle and (ii) a single crystal structure particle.

In some embodiments, (i) the first secondary particle may be present in an amount of 60 to 90 parts by weight and (ii) the single crystal structure particle may be present in an amount of 10 to 40 parts by weight relative to 100 parts by weight of the mixture.

In some embodiments, (i) the first secondary particle may have a size of 14 µm to 18 µm and (ii) the single crystal structure particle may have a size of 1 to 7 µm.

In some embodiments, if (e.g., when) a peak in the region of 4.1 V to 4.2 V is referred to as I1 and a peak in the region of 4.7 V to 4.9 V is referred to as I2 in a dQ/dV profile upon charging from 2.8 V to 5 V, a ratio of I1/I2 may be greater than or equal to 20.

In some embodiments, the nickel-based active material may include Li_{1.01}Ni_{0.8}Co_{0.1}Al_{0.1}O₂, Li_{1.01}Ni_{0.8}Co_{0.05}Al_{0.15}O₂, Li_{1.01}Ni_{0.8}CO_{0.15}Al_{0.05}O₂, LiNi_{0.95}Co_{0.04}Al_{0.01}O₂, or a combination thereof.

According to one or more embodiments of the present disclosure, a method of preparing a positive electrode active material for rechargeable lithium batteries includes: preparing a first positive electrode active material from a mixture including a nickel-based active material, a cobalt compound, and a solvent, the cobalt compound being wet-coated on a surface of the nickel-based active material; preparing a second positive electrode active material by dry coating a boron compound on a surface of the first positive electrode active material; and preparing a positive electrode active material for rechargeable lithium batteries by subjecting the second positive electrode active material to heat treatment at 700 °C to 750 °C, wherein boron from the boron compound is 0.25 mol% to 0.5 mol% in amount based on a total 100 mol% of transition metal elements excluding lithium in the nickel-based active material.

According to one or more embodiments of the present disclosure, a rechargeable lithium battery includes a positive electrode including the positive electrode active material for the rechargeable lithium battery; a negative electrode; and an electrolyte.

At least some of the above and other features of the invention are set out in the claims.

Embodiments of the present disclosure provide a positive electrode active material for rechargeable lithium batteries that secures (e.g., ensures) excellent improvement in high temperature life while suppressing ignition through increase in outgassing amount if (e.g., when) overcharged to 4.8 V or more. In addition, embodiments of the present disclosure provide a positive electrode active material for rechargeable lithium batteries that secures (e.g., ensures) increased charge and discharge efficiency, improved capacity, suppression of side reaction, such as outgassing, and reduction in resistance.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain principles of the disclosure.
FIG. 1 is a schematic illustration of a cylindrical battery according to one or more embodiments of the disclosure.
FIG. 2 is a schematic illustration of a prismatic battery according to one or more embodiments of the disclosure.
FIG. 3 is a schematic illustration of a pouch-type or kind battery according to one or more embodiments of the disclosure.
FIG. 4 is a schematic illustration of a pouch-type or kind battery according to one or more embodiments of the disclosure.
FIG. 5 is a scanning electron micrograph (SEM) image of a positive electrode prepared using a positive electrode active material of Example 1.
FIG. 6 is an SEM image of the portion shown inside the box of FIG. 5 at a larger magnification.
FIG. 7 is a graph depicting results of high temperature life evaluation of rechargeable lithium batteries of Examples and Comparative Examples.
FIG. 8 is a graph depicting outgassing evaluation results after the rechargeable lithium batteries of Examples and Comparative Examples were left at 80 °C.
FIG. 9 is a graph depicting outgassing evaluation results of the rechargeable lithium batteries of Examples and Comparative Examples when overcharged from 2.8 V to 5 V.
FIG. 10 is a graph depicting charge profiles (capacity vs voltage) of the rechargeable lithium batteries of Examples and Comparative Examples when overcharged to 5 V.
FIG. 11 is a graph depicting a charge profile dQ/dV of the rechargeable lithium batteries of Examples and Comparative Examples when overcharged to 5 V, in which the x-axis denotes voltage, the y-axis denotes a derivative graph of a capacity change/voltage change relationship, the voltage distribution is in the range of 3.0 V to 4.2 V, with plateau peaks (H2+H3 phase transition) in the range of 4.1 V to 4.2 V, which typically occurs in high Ni (Ni ≥ 80) positive electrodes.
FIG. 12 is a graph depicting a charge profile dQ/dV of the rechargeable lithium batteries of Examples and Comparative Examples when overcharged to 5 V, in which the x-axis denotes voltage, the y-axis denotes a derivative graph of a capacity change/voltage change relationship, and the voltage distribution is in the range of 4.5 V to 5.0 V, which indirectly confirms outgassing caused by boron coating in a high voltage range.

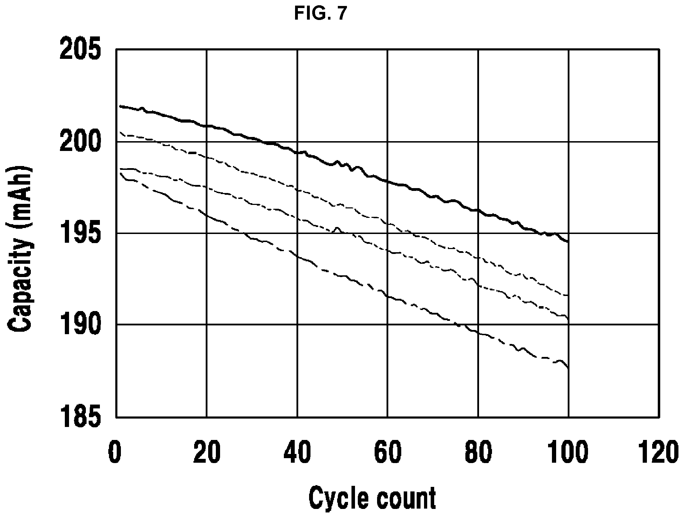

In FIG. 7 to FIG. 12, a solid line indicates Example 1, a dotted line indicates Example 2, a dash-dotted line indicates Comparative Example 1, and a dash-double dotted line indicates Comparative Example 2.

### DETAILED DESCRIPTION

Hereinafter, embodiments of the present disclosure will be described in more detail with reference to the accompanying drawings. However, it should be understood that the following embodiments are provided by way of illustration and the present disclosure is not limited thereto and is defined only by the appended claims and equivalents thereto.

The terminology used herein is for the purpose of describing embodiments of the present disclosure and is not intended to be limiting of the present disclosure. Throughout the specification, unless specified otherwise, each element may be singular or plural.

Herein, the term "combinations thereof" may refer to mixtures, stacks, composites, copolymers, alloys, blends, and reaction products of components.

It will be further understood that the terms "includes," "including," "comprises," and/or "comprising," when used in this specification, specify the presence of stated features, integers, steps, operations, elements, components, and/or groups, but do not preclude the presence or addition of one or more other features, integers, steps, operations, elements, components, and/or groups thereof.

In the drawings, thicknesses of various elements, layers, regions and the like may be exaggerated for clarity of illustration and the same elements are denoted by like reference numerals throughout the specification. In addition, when an arbitrary element is referred to as being disposed (or located or positioned) "above" (or "below") or "on" (or "under") a component, it may refer to that the arbitrary element is placed in contact with the upper (or lower) surface of the component and may also refer to that another component may be interposed between the component and the arbitrary element disposed (or located or positioned) on (or under) the component.

Herein, the term "layer" includes not only a feature formed on the entire surface but also a feature formed on a surface in a plan view.

Herein, the term "specific surface area" may be a value measured by the BET measurement method. BET surface area can be measured using MOUNTECH Macsorb HM Model-1208.

As used herein to represent a specific numerical range, "X to Y" refers to a value greater than or equal to X and less than or equal to Y (X≤ and ≤ Y).

As a high capacity positive electrode active material, a nickel-based active material with a high nickel content, for example, a nickel-based active material with a nickel content of 50 mol% or more, 70 mol% or more, or 80 mol% or more, may be used.

The nickel-based active material may be prepared by, for example, coprecipitation. In this method, doping elements, such as transition metal elements, for example, cobalt (Co), and/or aluminium (Al), manganese (Mn), zirconium (Zr), titanium (Ti), and/or magnesium (Mg) may be uniformly distributed in nickel used as the main component. The nickel-based active material prepared by this method may be prepared in the form of secondary particles.

The nickel-based active material prepared in the form of secondary particles can suffer from crack growth and side reaction with an electrolyte during repeated charge and discharge. As a result, a rechargeable lithium battery provided with positive electrodes including the nickel-based active material can suffer from deterioration in life (e.g., lifespan). For example, the nickel-based active material can reduce life of the rechargeable lithium battery at high temperatures. Accordingly, a nickel-based active material capable of improving life of the rechargeable lithium battery at high temperatures is desirable.

On the other hand, even if (e.g., when) the rechargeable lithium battery is stably operated at a general drive voltage, for example, 2.8 V to less than 4.8 V, the rechargeable lithium battery generates a gas through chemical reaction upon overcharge to a high voltage of 4.8 V or more, for example, to a voltage of 5.0 V or more. Thus, it is necessary or desirable for the rechargeable lithium battery to activate an overcharge anti-ignition component (e.g., ignition protection component) upon overcharge. The anti-ignition component may be activated by internal pressure upon overcharge and may include, for example, a current interrupt device (CID), a vent assembly, and/or the like. The ignition protection component is a safety device of the rechargeable lithium battery and can significantly reduce the possibility of ignition of the rechargeable lithium battery upon overcharge.

Accordingly, the inventors of the present application developed a positive electrode active material which includes a cobalt-containing coating layer and a boron-containing coating layer on a surface of a nickel-based active material and can improve life characteristics of rechargeable lithium batteries at a high temperature while generating a gas to operate (e.g., activate) an anti-ignition component upon overcharge to 4.8 V or more. If (e.g., when) the specific surface area of the outermost surface of the positive electrode active material is controlled to 0.45 m²/g to 0.60 m²/g, the positive electrode active material can improve life characteristics of the rechargeable lithium batteries at high temperatures and can generate a gas to operate the anti-ignition component upon overcharge to 4.8 V or more, thereby improving the safety of the rechargeable lithium batteries.

According to some embodiments, a positive electrode active material for rechargeable lithium batteries includes a nickel-based active material; a cobalt-containing coating layer on a surface of the nickel-based active material; and a boron-containing coating layer on a surface of the cobalt-containing coating layer, wherein the outermost surface of the positive electrode active material has a specific surface area of 0.45 m²/g to 0.60 m²/g (e.g., the positive electrode active material has a specific surface area of 0.45 m²/g to 0.60 m²/g).

The positive electrode active material having a specific surface area of 0.45 m²/g to 0.60 m²/g may include a coating layer that is a desirable or an optimal combination of boron and cobalt. If the positive electrode active material has a specific surface area of greater than 0.60 m²/g, the cobalt-containing coating layer can be formed in a higher amount on the surface of secondary particles than on grain boundaries of primary particles and can form side reactants during lifespan (e.g., operation of the battery during its lifespan), thereby obstructing or reducing improvement in life (e.g., lifespan). If the positive electrode active material has a specific surface area of less than 0.45 m²/g, the positive electrode active material can be almost absent of the boron-containing coating layer and thus can be unfavorable for outgassing in an overcharge voltage region (4.8 V or more). The inventors of the present application have discovered (and confirmed) that a positive electrode active material capable of improving life characteristics at a high temperature while capable of activating the anti-ignition component upon overcharge has a specific surface area of 0.45 m²/g to 0.60 m²/g.

In addition, if the specific surface area of the outermost surface of the positive electrode active material is less than 0.45 m²/g, the positive electrode active material cannot provide improvement in charge/discharge efficiency and lifespan at a high temperature, and can generate a low (e.g., insufficient) amount of gas upon overcharge, whereby the anti-ignition suppression component cannot operate properly. If the specific surface area of the outermost surface of the positive electrode active material is greater than 0.60 m²/g, the positive electrode active material can suffer from deterioration in charge/discharge capacity and efficiency, and the positive electrode active material can provide insignificant improvement in lifespan at a high temperature, compared to the positive electrode active material having the specific surface area of the outermost surface of 0.60 m²/g (e.g., 0.45 m²/g to 0.60 m²/g).

According to some embodiments, the nickel-based active material may include a secondary particle through physical and/or chemical agglomeration of primary particles.

According to some embodiments, the nickel-based active material may be, for example, a nickel-based active material represented by Formula 1:

Liₐ(Ni_{1-x-y-z}CoₓM_{y}M'_{z})O_{2-δ},

where M denotes at least one selected from among Mn and Al;
M' denotes at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al); and
a, x, y, z, and δ satisfy relations: 0.95≤a≤1.3, x≤(1-x-y-z), y≤(1-x-y-z), z≤(1-x-y-z), 0<x<1, 0≤y<1, 0≤z<1, and 1.98≤2-δ≤2.

The nickel-based active material of Formula 1 has a higher content of nickel than the content of each of cobalt, M and M'.

According to one embodiment, in Formula 1, x, y and z satisfy relations: 0.3≤1-x-y-z≤0.99, 0.5<1-x-y-z≤0.99, 0.6<1-x-y-z≤0.99, 0.8≤1-x-y-z≤0.99, or 0.8≤1-x-y-z≤0.95.

The nickel-based active material of Formula 1 may include a nickel-based active material represented by Formula 1-1.

Formula 1-1 Liₐ(Ni_{1-x-y-z}CoₓAl_{y}M_{z})O_{2-δ},

where M denotes at least one selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and manganese (Mn); and a, x, y, z and δ satisfy relations: 0.95≤a≤1.3, x≤(1-x-y-z), y≤(1-x-y-z), z≤(1-x-y-z), 0<x<1, 0≤y<1, 0≤z<1; and 1.98≤2-δ≤2.

In Formula 1-1, x, y, and z may satisfy relations: 0.3≤1-x-y-z≤0.99, 0.5<1-x-y-z≤0.99, 0.6<1-x-y-z≤0.99, 0.8≤1-x-y-z≤0.99, or 0.8≤1-x-y-z≤0.95. In Formula 1-1, x, y, and z may satisfy relations: 0.001≤x≤0.5, for example, 0.001≤x≤0.334; 0.001≤y≤0.5, for example, 0.001≤y≤0.334; 0≤z<1, for example, z = 0.

According to some embodiments, the nickel-based active material may include Li_{1.01}Ni_{0.8}Co_{0.1}Al_{0.1}O₂, Li_{1.01}Ni_{0.8}Co_{0.05}Al_{0.15}O₂, Li_{1.01}Ni_{0.8}Co_{0.15}Al_{0.05}O₂, LiNi_{0.95}Co_{0.04}Al_{0.01}O₂, or a combination thereof.

According to some embodiments, the nickel-based active material may include at least one of (i) a first secondary particle, (ii) a single crystal structure particle, or (iii) a one-body particle. Here, (i) the first secondary particle is a particle having a larger size than (ii) the single crystal structure particle.

For example, the nickel-based active material may be a mixture of (i) the first secondary particle; and (ii) the single crystal structure particle. According to one embodiment, relative to 100 parts by weight of the mixture, (i) the first secondary particles may be present in an amount of 60 to 90 parts by weight, for example, 60 to 80 parts by weight, and (ii) the single crystal structure particle may be present in an amount of 10 to 40 parts by weight, for example, 20 to 40 parts by weight.

The first secondary particle may be a secondary particle having a size of 13 µm to 20 µm and be formed through physical and/or chemical agglomeration of primary particles having a size of 1 µm or less. Within this size range, the first secondary particle can secure (e.g., ensure) the effect of maximizing or enhancing electrode plate density. For example, the first secondary particle may have a size of 14 µm to 18 µm, or 14 µm to 17 µm.

In the first secondary particle, the primary particles may have an average particle diameter of 0.01 µm to 1 µm, 0.02 µm to 0.8 µm, 0.03 µm to 0.5 µm, 0.04 µm to 0.1 µm, or 0.05 µm to 0.07 µm (50 nm to 70 nm). According to one embodiment, the first secondary particle may have a polycrystalline structure. As used herein, the term "polycrystalline" refers to an aggregate structure of a plurality of crystalline particles.

Herein, the term "size" refers to an average diameter of nickel-based active material particles if (e.g., when) the particles are spherical. If (e.g., when) the nickel-based active material particles are not spherical, the term "size" refers to the maximum value of major axis lengths that can be obtained from cross-sections of the particles.

The average particle diameter can be measured by, for example, a particle size distribution (PSD) instrument or by SEM. Unless otherwise defined, the average particle diameter refers to a particle diameter (D50), which refers to the diameter of particles corresponding to a cumulative volume of 50 volume % in a particle size distribution. The major axis lengths can be measured by, for example, SEM or the like.

Herein, the term "one-body particle" refers to a structure in which particles form morphologically distinct phases that are not mutually agglomerated. In contrast to the one-body particle, there is a particle structure in which small particles (primary particles) are physically and/or chemically agglomerated to form relatively larger particles (secondary particles).

The "single crystal" has a structure in which a number of crystalline particles are dispersed and/or separated from each other such that each particle forms an independent and/or distinct phase rather than an aggregated phase, and may also include a structure in which 10 or fewer particles are attached to each other.

Each of (ii) the single crystal structure particle and (iii) the one-body particle may have a size of 1 µm to 7 µm. According to one embodiment, the nickel-based active material may include a one-body particle containing primary particles having a size of 1 µm to 7 µm. According to another embodiment, the nickel-based active material may include a single crystalline particle having a size of 1 µm to 7 µm.

According to some embodiments, the nickel-based active material may have a size of 10 µm to 20 µm.

According to some embodiments, the positive electrode active material includes a cobalt-containing coating layer formed on a surface of the secondary particle; and a boron-containing coating layer formed on the cobalt-containing coating layer.

The cobalt-containing coating layer can improve thermal stability at high temperatures by protecting the nickel-based active material.

According to some embodiments, the cobalt-containing coating layer may be present on the surface of the secondary particle and also at the grain boundaries (surfaces) of the primary particles constituting the secondary particle. The cobalt-containing coating layer can prevent or substantially prevent the secondary particle from cracking at high temperatures, and can inhibit or reduce a side reaction caused by cracking while improving lifespan, even if cracking occurs.

According to some embodiments, the cobalt-containing coating layer may be formed of a lithium-cobalt compound.

According to some embodiments, the cobalt-containing coating layer may have a thickness of 100 nm or less, for example, 1 nm to 100 nm, 1 nm to 50 nm, or 5 nm to 50 nm. Within these ranges, the cobalt-containing coating layer can secure (e.g., ensure) good improvement in stability of the positive electrode active material.

The boron-containing coating layer can reduce resistance while improving charge/discharge efficiency through improvement in conductivity of the nickel-based active material.

According to some embodiments, the boron-containing coating layer may be integrally formed with the cobalt-containing coating layer. As used herein, the term "integrally formed" refers to that the cobalt-containing coating layer and the boron-containing coating layer are formed simultaneously or concurrently by wet coating a cobalt compound on the surface of the nickel-based active material, followed by dry coating a boron compound and heat treatment at 700 °C to 750 °C. That is, no separate heating on the wet coated cobalt compound is conducted, and the boron compound is coated directly on the wet-coated cobalt compound right after the wet coating of the cobalt compound. The wet coated cobalt-containing coating layer and the dry coated boron-containing coating layer are then heat treated together (concurrently).

According to some embodiments, the boron-containing coating layer may be a distinct layer independent of the cobalt-containing coating layer.

According to some embodiments, the boron-containing coating layer may be formed of a lithium-boron compound.

According to some embodiments, the boron-containing coating layer may have a thickness of 100 nm or less, for example, 1 nm to 100 nm, 1 nm to 50 nm, or 5 nm to 50 nm. Within these ranges, the boron-containing coating layer can secure (e.g., ensure) good improvement in stability of the positive electrode active material.

The positive electrode active material may have a nickel content of, for example, 70 mol% or more, 70 mol% to 95 mol%, or 80 mol% to 95 mol% (e.g. based on a total 100 mol% of all metals excluding lithium in the positive electrode active material).

According to some embodiments, the positive electrode active material having a specific surface area of 0.45 m²/g to 0.60 m²/g may be prepared by a method of preparing the positive electrode active material described below.

### Method of preparing positive electrode active material for rechargeable lithium batteries

Hereinafter, the method of preparing a positive electrode active material for rechargeable lithium batteries is described in more detail.

The preparation method includes: preparing a first positive electrode active material from a mixture including a nickel-based active material, a cobalt compound, and a solvent, the cobalt compound being wet-coated on a surface of the nickel-based active material;
preparing a second positive electrode active material by dry coating a boron compound on a surface of the first positive electrode active material; and
preparing a positive electrode active material for rechargeable lithium batteries by subjecting the second positive electrode active material to heat treatment at 700 °C to 750 °C,
wherein the boron compound is dry-coated on the surface of the first positive electrode active material to provide 0.25 mol% to 0.5 mol% of boron based on the total content 100 mol% of transition metal elements excluding lithium (e.g., all metal elements excluding lithium) in the nickel-based active material.

(1) First, the mixture is prepared by mixing a nickel-based active material, a cobalt compound and a solvent. The nickel-based active material may be a compound represented by Formula 1.

The cobalt compound may include, for example, cobalt hydroxide, cobalt chloride, cobalt nitrate, cobalt sulfate, cobalt oxide, cobalt carbonate, cobalt citrate, cobalt acetate, or a combination thereof.

The cobalt compound may be present in the mixture to provide 1 mol% to 3 mol% of cobalt based on the total content of transition metals excluding lithium in the nickel-based active material. The cobalt content of 1 mol% to 3 mol% can facilitate the preparation of the positive electrode active material having the specific surface area ranges described above in a coating amount of a boron compound described below and at a heat treatment temperature described below.

The solvent may be any suitable solvent capable of dissolving or dispersing the nickel-based active material and the cobalt compound, and may include, for example, distilled water, ethanol, methanol, isopropanol, butanol, pentanol, or a combination thereof. For example, the solvent may be an aqueous solvent, for example, distilled water.

(2) Next (or as a result of act (1)), the first positive electrode active material, in which the cobalt compound is wet-coated on the surface of the nickel-based active material, is prepared. Wet coating may be performed by mixing the nickel-based active material, the cobalt compound, and the solvent with each other.

(3) Next, the second positive electrode active material is prepared by dry coating a boron compound on the surface of the first positive electrode active material. Dry coating may be performed by mixing the first positive electrode active material with a boron compound.

The boron compound may include boron trioxide (B₂O₃), sodium borohydride (NaBH₄), sodium cyanoborohydride (NaCNBHs), sodium acetate cyanoborohydride (NaBHsOAc), or a mixture thereof.

The boron compound is present in the mixture to provide 0.25 to 0.5 mol% of boron based on the total 100 mol% of transition metal elements excluding lithium in the nickel-based active material, and is dry-coated.

If the boron content is less than 0.25 mol%, the positive electrode active material can exhibit insufficient improvement in lifespan at high temperature and generates an insufficient amount of gas upon overcharge, whereby the ignition protection component cannot operate properly. If the boron content is greater than 0.5 mol%, the positive electrode active material can exhibit insufficient improvement in lifespan at high temperature, and the excessive boron content in the boron-containing coating layer can increase resistance while reducing charge/discharge capacity and efficiency.

(4) The second positive electrode active material is subjected to heat treatment at 700 °C to 750 °C to prepare a positive electrode active material for rechargeable lithium batteries. In this temperature range, the preparation of the positive electrode active material having the specific surface area can be facilitated.

### Rechargeable lithium battery

According to some embodiments, a rechargeable lithium battery includes a positive electrode including the positive electrode active material for rechargeable lithium batteries; a negative electrode; and an electrolyte.

The positive electrode may include a current collector and a positive electrode active material layer formed on the current collector. The positive electrode active material layer may include a positive electrode active material and may further include a binder and/or a conductive material.

In one embodiment, the positive electrode may further include an additive capable of acting as a sacrificial positive electrode.

The positive electrode active material may be present in an amount of 90 wt% to 99.5 wt% based on 100 wt% of the positive electrode active material layer, and each of the binder and the conductive material may be present in an amount of 0.5 wt% to 5 wt% based on 100 wt% of the positive electrode active material layer.

The positive electrode active material layer includes a positive electrode active material according to one or more embodiments of the present disclosure.

In addition to the positive electrode active material according to the embodiments, the positive electrode active material may further include a different positive electrode active material for rechargeable lithium batteries.

The different positive electrode active material for rechargeable lithium batteries according to one embodiment may include at least one composite oxide of a metal selected from among cobalt, manganese, nickel and combinations thereof with lithium.

The composite oxide may be a lithium transition metal composite oxide. For example, the composite oxide may include a lithium nickel oxide, a lithium cobalt oxide, a lithium manganese oxide, a lithium iron phosphate compound, a cobalt-free lithium manganese oxide, or a combination thereof.

By way of example, the composite oxide may be a compound represented by any one of the following formulas: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); and Li_{(3-f)}Fe₂(PO₄)₃(0≤f≤2); and LiₐFePO₄ (0.90≤a≤1.8).

In the above formula, A is Ni, Co, Mn, or a combination thereof; X denotes Al, Ni, Co, Mn, Cr, Fe, Mg, Sr, V, a rare-earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

In some embodiments, the positive electrode active material may be a high nickel-content positive electrode active material containing 80 mol% or more, 85 mol% or more, 90 mol% or more, 91 mol% or more, or 94 mol% to 99 mol% of nickel based on 100 mol% of metals excluding lithium in the lithium transition metal composite oxide. The high nickel-content positive electrode active material can realize high capacity and thus can be applied to high capacity/high density rechargeable lithium batteries.

The binder serves to attach positive electrode active material particles to each other while attaching the positive electrode active material to the current collector. The binder may include, for example, polyvinyl alcohol, carboxymethylcellulose, hydroxypropylcellulose, diacetylcellulose, polyvinyl chloride, carboxylated polyvinyl chloride, polyvinyl fluoride, polymers including ethylene oxide, polyvinyl pyrrolidone, polyurethane, polytetrafluoroethylene, polyvinylidene fluoride, polyethylene, polypropylene, styrene-butadiene rubbers, (meth)acrylated styrene-butadiene rubbers, epoxy resins, (meth)acrylic resins, polyester resins, Nylon, and/or the like, without being limited thereto.

The conductive material serves to impart conductivity to the electrodes and may be any electrically conductive material that does not cause chemical change in cells under construction. The conductive material may include, for example, carbon materials, such as natural graphite, artificial graphite, carbon black, acetylene black, Ketjen black, carbon fiber, carbon nanofibers, carbon nanotubes, and/or the like; metal-based materials in the form of metal powders or metal fibers containing copper, nickel, aluminium, silver, and/or the like; conductive polymers, such as polyphenylene derivatives and/or the like; and mixtures thereof.

The current collector may be Al, without being limited thereto.

The negative electrode includes a current collector and a negative electrode material layer disposed on the current collector. The negative electrode material layer includes a negative electrode material and may further include a binder and/or a conductive material.

For example, the negative electrode material layer may include 90 wt% to 99 wt% of the negative electrode material, 0.5 wt% to 5 wt% of the binder, and 0 wt% to 5 wt% of the conductive material.

The negative electrode material includes a material capable of allowing reversible intercalation/deintercalation of lithium ions, lithium metal, a lithium metal alloy, a material capable of being doped to lithium and de-doped therefrom, or a transition metal oxide.

The material capable of allowing reversible intercalation/deintercalation of lithium ions may include a carbon-based negative electrode material, for example, crystalline carbon, amorphous carbon, or a combination thereof. The crystalline carbon may include, for example, graphite, such as natural graphite or artificial graphite, in amorphous (non-shaped), plate, flake, spherical, or fibrous form, and the amorphous carbon may include, for example, soft carbon, hard carbon, mesoporous pitch carbides, calcined coke, and/or the like.

As the lithium metal alloy, an alloy of lithium and a metal selected from among Na, K, Rb, Cs, Fr, Be, Mg, Ca, Sr, Si, Sb, Pb, In, Zn, Ba, Ra, Ge, Al and Sn may be used.

The material capable of being doped to lithium and de-doped therefrom may be an Si-based negative electrode material or an Sn-based negative electrode material. The Si-based negative electrode material may be silicon, a silicon-carbon composite, SiOₓ (0<x≤2), Si-Q alloys (where Q is selected from among alkali metals, alkali-earth metals, Group XIII elements, Group XIV elements (excluding Si), Group XV elements, Group XVI elements, transition metals, rare-earth elements, and combinations thereof), or combinations thereof. The Sn-based negative electrode material may be Sn, SnOₓ (0 < x ≤ 2, e.g., SnO₂), an Sn alloy, or a combination thereof.

The silicon-carbon composite may be a composite of silicon and amorphous carbon. According to one embodiment, the silicon-carbon composite may be prepared in the form of silicon particles having an amorphous carbon coating formed on the surface thereof. For example, the silicon-carbon composite may include secondary particles (cores) composed of primary silicon particles and an amorphous carbon coating layer (shell) formed on the surface of the secondary particles. The amorphous carbon may also be placed between the primary silicon particles such that, for example, the primary silicon particles are coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer formed on the core.

The Si-based negative electrode material or the Sn-based negative electrode material may be used in combination with the carbon-based negative electrode material.

The binder serves to attach the negative electrode material particles to each other while attaching the negative electrode material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymers, polystyrene, polyurethane, polytetrafluoroethylene, polyvinylidene fluoride, polyethylene, polypropylene, polyamideimide, polyimide, or combinations thereof.

The aqueous binder may be selected from the group consisting of styrene-butadiene rubbers, (meth)acrylated styrene-butadiene rubbers, (meth)acrylonitrile-butadiene rubbers, (meth)acrylic rubbers, butyl rubbers, fluorinated rubbers, polyethylene oxide, polyvinyl pyrrolidone, polyepichlorohydrin, polyphosphazene, poly(meth)acrylonitrile, ethylene propylene diene copolymers, polyvinyl pyridine, chlorosulfonated polyethylene, latex, polyester resins, (meth)acryl resins, phenol resins, epoxy resins, polyvinyl alcohol, and combinations thereof.

If (e.g., when) the aqueous binder is used as the negative electrode binder, a cellulose-based compound capable of imparting (e.g., providing suitable) viscosity may be further included. The cellulose-based compound may be a mixture of carboxymethylcellulose, hydroxypropyl methylcellulose, methylcellulose, or alkali metal salts thereof. The alkali metal may be Na, K, or Li.

The dry binder may be a fibrous polymeric material and may include, for example, polytetrafluoroethylene, polyvinylidene fluoride, a polyvinylidene fluoride-hexafluoropropylene copolymer, polyethylene oxide, or a combination thereof.

The conductive material serves to impart conductivity to the electrodes and may be any electrically conductive material that does not cause chemical change in cells under construction. Specifically, the conductive material may include, for example, carbon materials, such as natural graphite, artificial graphite, carbon black, acetylene black, Ketjen black, carbon fibers, carbon nanofibers, carbon nanotubes, and/or the like; metal-based materials in the form of metal powders or metal fibers containing copper, nickel, aluminium, silver, and/or the like; conductive polymers, such as polyphenylene derivatives and/or the like; or mixtures thereof.

The negative electrode current collector may be selected from copper foil, nickel foil, stainless steel foil, titanium foil, nickel foam, copper foam, a conductive metal-coated polymer base, and combinations thereof.

The electrolyte includes a non-aqueous organic solvent and a lithium salt.

The non-aqueous organic solvent acts as a medium through which ions involved in electrochemical reaction of a cell can move.

The non-aqueous organic solvent may be a carbonate-based solvent, an ester-based solvent, an ether-based solvent, a ketone-based solvent, an alcohol-based solvent, a non-amphoteric solvent, or a combination thereof.

The carbonate-based solvents may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), and/or butylene carbonate (BC).

The ester-based solvents may include methyl acetate, ethyl acetate, n-propyl acetate, dimethyl acetate, methyl propionate, ethyl propionate, decanolide, mevalonolactone, valerolactone, caprolactone, and/or the like.

The ether-based solvents may include dibutyl ether, tetraglyme, diglyme, dimethoxyethane, 2-methyltetrahydrofuran, 2,5-dimethyltetrahydrofuran, tetrahydrofuran, and/or the like. In addition, the ketone-based solvent may include cyclohexanone and/or the like. The alcohol-based solvents may include ethyl alcohol, isopropyl alcohol, and/or the like, and non-amphoteric solvent may include nitriles, such as R-CN (where R is a straight, branched or cyclic hydrocarbon group having 2 to 20 carbon atoms and may include double bonds, aromatic rings, or ether groups); amides, such as dimethylformamide; dioxolanes, such as 1,3-dioxolane, 1,4-dioxolane, and/or the like; sulfolanes; and/or the like.

The non-aqueous organic solvent may be used alone or as a mixture thereof.

In use of the carbonate-based solvent, a mixture of a cyclic carbonate and a chain carbonate may be used, and the cyclic carbonate and the chain carbonate may be mixed in a volume ratio of 1:1 to 1:9.

The lithium salt is a substance that is soluble in an organic solvent and serves as a source of lithium ions in a battery, enabling operation of a basic rechargeable lithium battery while facilitating transfer of the lithium ions between the positive electrode and the negative electrode. Examples of the lithium salts may include at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide (LiFSI)), LiC₄F₉SO₃, LiN(CₓF₂ₓ₊₁SO₂)(C_{y}F_{2y+1}SO₂) (where x and y are integers of 1 to 20), lithium trifluoromethane sulfonate, lithium tetrafluoroethane sulfonate, lithium difluorobis(oxalato)phosphate (LiDBOP), and lithium bis(oxalato)borate (LiBOB).

Depending on the type of rechargeable lithium battery, a separator may be interposed between the positive electrode and the negative electrode. For such a separator, polyethylene, polypropylene, polyvinylidene fluoride, or at least two layers thereof may be used. Mixed layers, such as a polyethylene/polypropylene bilayer separator, a polyethylene/polypropylene/polyethylene trilayer separator, a polyethylene/polyethylene/polypropylene trilayer separator, and/or the like may be used.

The separator may include a porous substrate and a coating layer that includes an organic material, an inorganic material, or a combination thereof on one or both surfaces of the porous substrate.

The porous substrate may be a polymer layer formed of a polymer selected from among polyolefins, such as polyethylene polypropylene, and/or the like, polyesters, such as polyethylene terephthalate, polybutylene terephthalate, and/or the like, polyacetal, polyamides, polyimides, polycarbonates, polyether ketones, polyarylether ketones, polyetherimides, polyamideimides, polybenzimidazole, polyethersulfone, polyphenylene oxides, cyclic olefin copolymers, polyphenylene sulfides, polyethylene naphthalate, glass fiber, and polytetrafluoroethylene (e.g., Teflon), copolymers thereof, or mixtures thereof.

The organic material may include a polyvinylidene fluoride polymer or a (meth)acrylic polymer. The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and combinations thereof, without being limited thereto.

The organic material and the inorganic material may be present in a mixed state in one coating layer or may be present in the form of a stack structure of a coating layer including the organic material and a coating layer including the inorganic material.

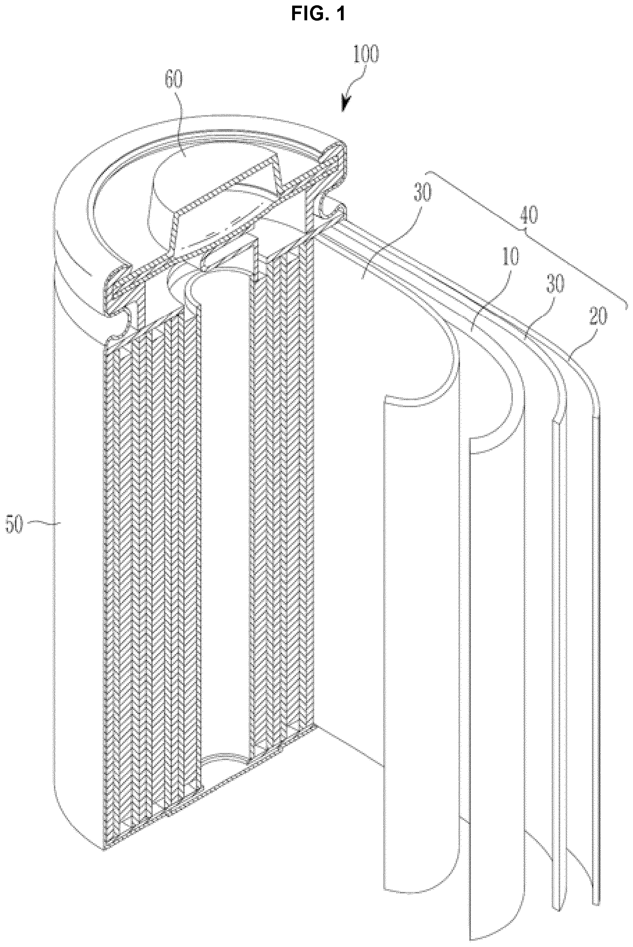

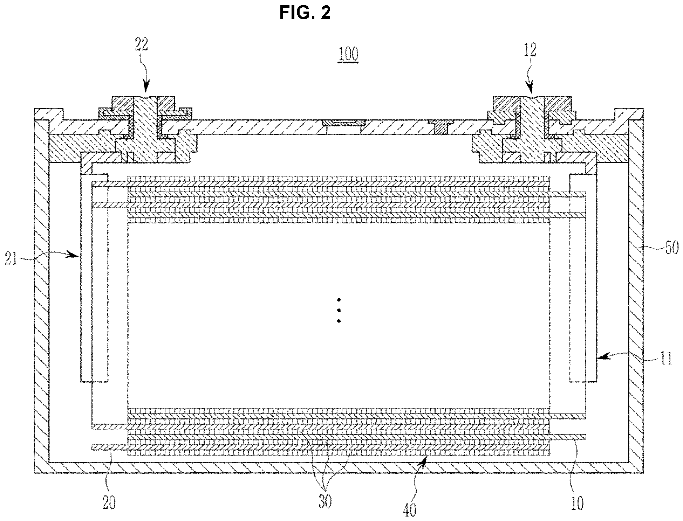

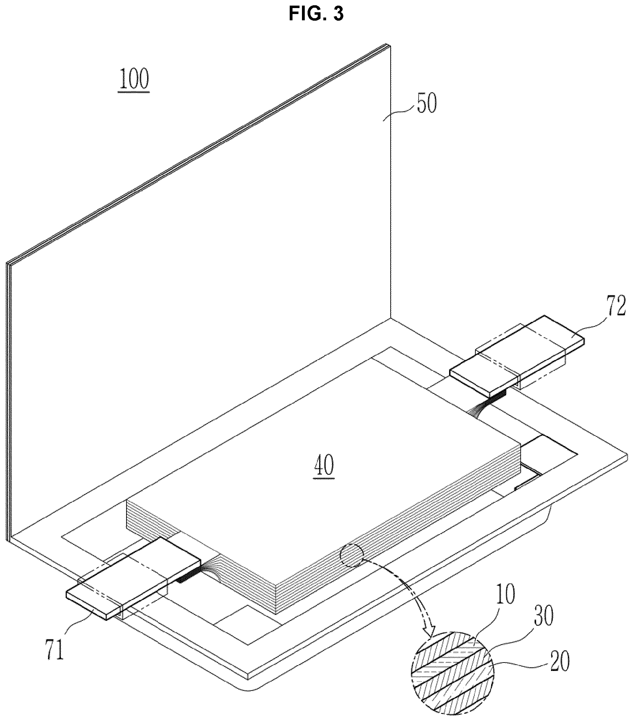

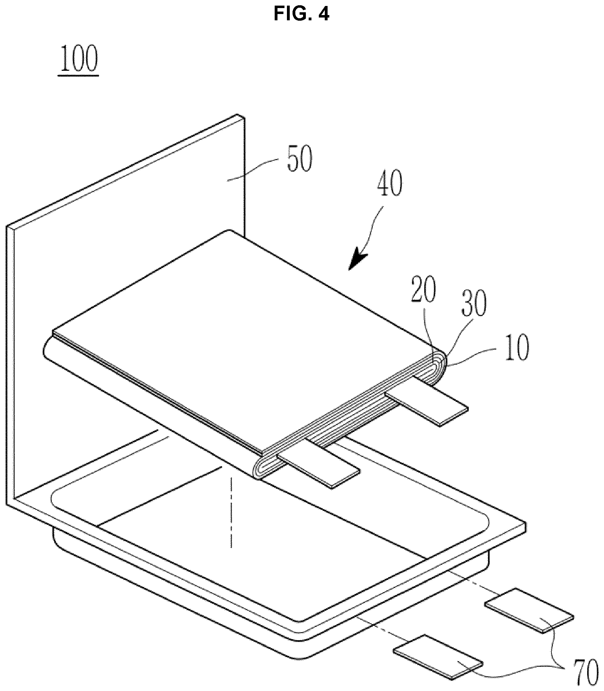

Rechargeable lithium batteries may be classified into a cylindrical battery, a prismatic battery, a pouch type battery, a coin type battery, and the like based on the shapes thereof. FIG. 1 to FIG. 4 are schematic views of rechargeable lithium batteries according to embodiments of the present disclosure, in which FIG. 1 shows a cylindrical secondary battery, FIG. 2 shows a faceted (e.g., prismatic) secondary battery, and FIG. 3 and FIG. 4 show pouch-type secondary batteries. Referring to FIG. 1 to FIG. 4, a rechargeable lithium battery 100 may include an electrode assembly 40 in which a separator 30 is interposed between a positive electrode 10 and a negative electrode 20, and a case 50 that receives the electrode assembly 40 therein. The positive electrode 10, the negative electrode 20, and the separator 30 may be embedded in an electrolyte. The rechargeable lithium battery 100 may include a sealing member 60 that seals the case 50, as shown in FIG. 1. In addition, as shown in FIG. 2, the rechargeable lithium battery 100 may include a positive electrode lead tab 11, a positive electrode terminal 12, a negative electrode lead tab 21, and a negative electrode terminal 22. Referring to FIG. 3 and FIG. 4, the rechargeable lithium battery 100 may include electrode tabs 70, that is, a positive electrode tab 71 and a negative electrode tab 72, which act as electrical pathways conducting current generated in the electrode assembly 40 to the outside.

Rechargeable lithium batteries according to embodiments of the present disclosure may be applied to automobiles, mobile phones, and/or various other electrical devices, without being limited thereto.

Next, the present disclosure will be described in more detail with reference to examples. However, it should be understood that these examples are provided for illustration only and should not be construed in any way as limiting the disclosure.

### Example 1: Preparation of positive electrode active material for rechargeable lithium batteries

(1) An aluminium precursor, Al₂(SO₄)₃(H₂O)₁₈, was mixed with NaOH, NH₄OH, and water to prepare an aqueous solution of the aluminium precursor.

In addition, a nickel precursor, NiSO₄(H₂O)₆, was mixed with water to prepare an aqueous solution of the nickel precursor, and a cobalt precursor, CoSO₄(H₂O)₇, was mixed with water to prepare an aqueous solution of the cobalt precursor, respectively.

With the aqueous solution of the aluminium precursor placed in a reactor, the aqueous solution of the nickel precursor and the aqueous solution of the cobalt precursor were dropwise added to the reactor to obtain a reaction mixture, followed by stirring the reaction mixture for 10 to 20 hours. The content of each of the nickel precursor, the cobalt precursor and the aluminium precursor in the reaction mixture was stoichiometrically controlled until the molar ratio of nickel, manganese and aluminium reached 95:4:1.

An aqueous solution of sodium hydroxide was added to the reaction mixture to adjust the pH of the reaction mixture to 10 to 12. A resulting product obtained by filtering and washing the resulting precipitates was dried at 100 °C in a vacuum, thereby preparing a nickel cobalt aluminium hydroxide powder (Ni_{0.95}Co_{0.04}Al_{0.01}(OH)₂).

After mixing the nickel cobalt aluminium hydroxide with lithium hydroxide (LiOH) as a lithium precursor in a bowl, the mixture was placed in a furnace and then subjected to primary heat treatment at 750 °C for 20 hours while supplying O₂ to the furnace, thereby preparing a nickel-based active material. The content of each of the nickel cobalt aluminium hydroxide and the lithium precursor was controlled such that the mixing ratio of transition metals (metals of nickel, cobalt, and aluminum) to lithium reached 1:1.03.

The prepared nickel-based active material was in the form of (i) first secondary particles (NCA, LiNi_{0.95}Co_{0.04}Al_{0.01}O₂) having an average particle diameter of 14 µm.

(2) Single crystal structure particles (NCA, LiNi_{0.95}Co_{0.04}Al_{0.01}O₂) were prepared in the same manner as in (1) except that the reaction mixture to obtain the nickel-cobalt-aluminium hydroxide was stirred for 30 hours to control the precursor size and the primary heat treatment was performed at 850 °C instead of 750 °C, followed by grinding and heat treatment at 750 °C. The (ii) single crystals particles had an average particle diameter of 3 µm to 4 µm.

(3) A nickel-based active material was prepared by mixing 70 parts by weight of the (i) first secondary particles and 30 parts by weight of the (ii) single crystals particles relative to 100 parts by weight of the (i) first secondary particles and the (ii) single crystal structure particles.

(4) A composition for a positive electrode active material including the nickel-based active material having a cobalt compound wet-coated on the surface thereof was prepared by mixing the nickel-based active material, cobalt hydroxide (Co(OH)₂) as the cobalt compound, and water as a solvent. Cobalt hydroxide was added to the mixture such that the nickel-based active material prepared in (3) had a cobalt content of 3 mol% based on the total content of transition metals excluding lithium.

(5) Next, B₂O₃ was added as a boron compound to the composition from (4) under a nitrogen gas atmosphere and was mixed therewith at 25 °C for 2 hours. Then, the boron compound was dry-coated on the surface of the nickel-based active material wet-coated with the cobalt compound and was subjected to secondary heat treatment at 725 °C for 12 hours, thereby preparing a desired positive electrode active material. The boron compound was added to the composition such that the nickel-based active material prepared in (3) had a boron content of 0.25 mol% based on the total content of transition metals excluding lithium.

### Example 2: Preparation of positive electrode active material

A positive electrode active material was prepared in the same manner as in Example 1 except that the boron compound in (5) of Example 1 was added such that the nickel-based active material prepared in (3) had a boron content of 0.5 mol% based on the total content of the transition metal elements excluding lithium.

### Comparative Example 1: Preparation of positive electrode active material

Steps (1) to (4) of Example 1 were performed identically. Then, a positive electrode active material was obtained through second heat treatment at 725 °C for 12 hours.

### Comparative Example 2: Preparation of positive electrode active material

A positive electrode active material was prepared in the same manner as in Example 1 except that the boron compound was added such that the nickel-based active material prepared in (3) had a boron content of 0.75 mol% based on the total content of the transition metal elements excluding lithium.

### (Preparation of rechargeable lithium batteries)

Rechargeable lithium batteries were prepared as follows using the positive electrode active materials prepared in Examples and Comparative Example.

An evenly dispersed positive electrode active material slurry was prepared by mixing the positive electrode active material, carbon black as a conductive material, polyvinylidene fluoride as a binder, and N-methyl pyrrolidone as a solvent in a mixer to remove air bubbles. In the slurry, the weight ratio of the active material, carbon black, and polyvinylidene fluoride was 97.7:1.0:1.3 based on 100 parts by weight in total, and the solvent was present in an amount of about 50 parts by weight relative to 90 parts by weight of the positive electrode active material.

The prepared slurry was coated on an aluminium foil using a doctor blade to form a thin electrode plate, which in turn was dried at 135 °C for 3 hours or more, rolled and dried in a vacuum to prepare positive electrodes.

Graphite powder (Japan Carbon) as a negative electrode material and a mixture of styrene butadiene rubber (SBR) and carboxymethyl cellulose (CMC) in a weight ratio of 1:1 were mixed in a weight ratio of 98:2 to prepare a negative electrode material slurry

The prepared negative electrode active material slurry was coated at a loading level of 19.5 mg/cm² on a copper foil collector having a thickness of 8 µm. The coated electrode plate was dried at 100 °C for 1 hour or more, and then rolled to prepare negative electrodes having a composite density of 1.60 g/cm³.

Rechargeable lithium batteries with a capacity of 30 mAh were prepared using the positive electrodes and the negative electrodes together with a polyethylene separator (separator, STAR 20, Asahi) and an electrolyte in which 1.15 M LiPF₆ was dissolved in a mixed solvent of EC (ethylene carbonate), EMC (ethyl methyl carbonate) and DMC (dimethyl carbonate) (3:3:4 volume ratio)

### Evaluation Example 1: Scanning Electron Microscopy (FE-SEM)

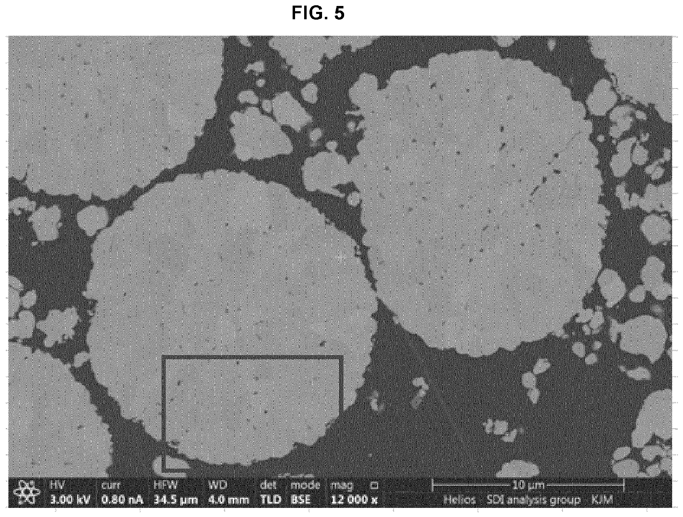

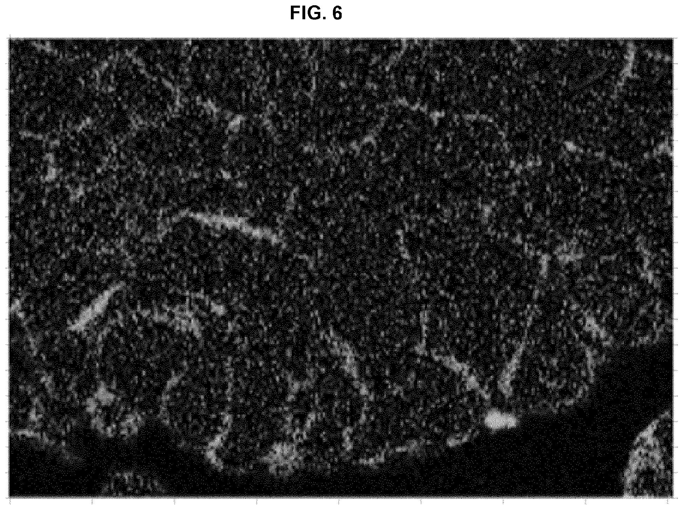

A cross-section of the positive electrode prepared using the positive electrode active material prepared in Example 1 was measured by SEM and results are shown in FIG. 5. In addition, SEM image at a higher magnification of a peripheral portion (inside the boxed portion) of the positive electrode active material in FIG. 5 is shown in FIG. 6.

As shown in FIG. 5, it can be seen that the positive electrode active material prepared in Example 1 is uniformly coated with a coating material on the nickel-based active material thereof.

As shown in FIG. 6, it can be seen that bright regions represent cobalt, indicating that the grain boundaries of the primary particles of the nickel-based active material are uniformly coated with cobalt.

### Evaluation Example 2: Specific surface area of positive electrode active material

The specific surface area of the positive electrode active material prepared in each of Examples and Comparative Examples was measured by a BET measurement method and results are shown in Table 1. As shown in Table 1, it could be seen that the positive electrode active materials of Examples coated with 0.25 mol% and 0.5 mol% of boron relative to 3 mol% of cobalt had a specific surface area of 0.45 m²/g to 0.60 m²/g. However, the positive electrode active materials of Comparative Examples coated with no boron or with 0.75 mol% of boron relative to 3 mol% cobalt had a specific surface area outside the range of 0.45 m²/g to 0.60 m²/g.

### Evaluation Example 3: Charge/discharge capacity and efficiency

For each of the rechargeable lithium batteries of Examples and Comparative Examples, initial discharge capacity was measured by charging the battery at a constant current of 0.2 C from 2.8 V to an upper limit voltage of 4.2 V at 25 °C, and charging the battery until the current dropped to an end condition of 0.05 C, followed by discharging at 0.2 C to a discharge end voltage of 2.8 V. Results are shown in Table 1.

As shown in Table 1, the positive electrode active materials of Examples having a specific surface area of 0.45 m²/g to 0.60 m²/g exhibited significant improvement in efficiency, as compared to the positive electrode active materials of Comparative Examples.

### Evaluation Example 4: High Temperature Lifespan

Each of the rechargeable lithium batteries prepared in Examples and Comparative Examples was charged at a constant current charge of 0.2 C from 2.8 V to an upper limit voltage of 4.2 V at 45 °C and was then charged at a constant voltage until the current dropped to 0.05 C while maintaining the voltage at 4.2 V. Then, the battery was discharged at a constant current of 0.2 C until the voltage dropped to 2.8 V (Formation stage).

Each of the rechargeable lithium batteries that had undergone the formation stage was charged at a constant current of 1 C at 45 °C until the voltage reached 4.2 V, and was charged at a constant voltage until the current dropped to 0.05 C while maintaining the voltage at 4.2 V. Then, a cycle of discharging the battery at a constant current of 1 C until the voltage dropped to 2.8 V was repeated 50 times.

Results are shown in FIG. 7. As shown in FIG. 7, it could be seen that the positive electrode active materials of Examples having a specific surface area of 0.45 m²/g to 0.60 m²/g exhibited significant improvement in high temperature lifespan, as compared to the positive electrode active materials of Comparative Examples. In particular, it could be seen that the positive electrode active material of the Examples with a specific surface area of 0.45 m²/g to 0.60 m²/g exhibited significant improvement in high temperature lifespan, as compared to the positive electrode active material of Comparative Example 1 with a specific surface area of 0.41 m²/g and the positive electrode active material of Comparative Example 2 with a specific surface area of 0.76 m²/g.

### Evaluation Example 5: Outgassing amount after residence at 80 °C

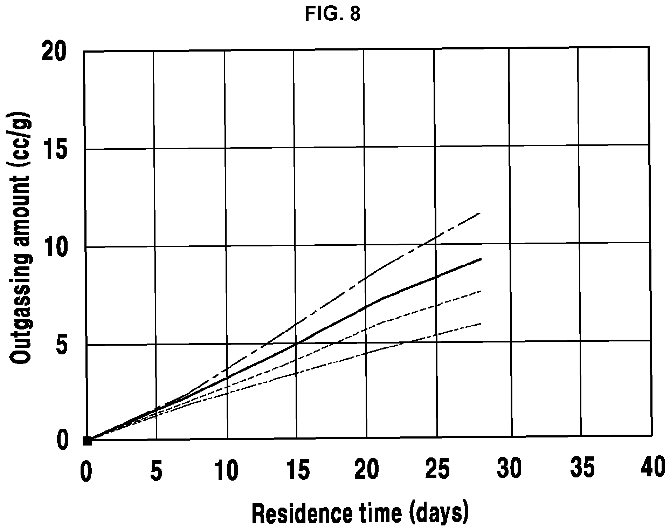

The rechargeable lithium batteries of Examples and Comparative Examples were left in a chamber at constant temperature of 80 °C for a predetermined period of time to evaluate the amount of outgassing in the battery per weight of the positive electrode active material. The amount of outgassing was evaluated by the Archimedes measurement method. Results are shown in FIG. 8.

As shown in FIG. 8, it could be seen that the positive electrode active materials of the Examples had much lower outgassing amounts after resistance (e.g., storage) at high temperature than the positive electrode active material of Comparative Example 1 having no boron coating layer.

### Evaluation Example 6: Outgassing amount in overcharge state from 2.8 V to 5 V

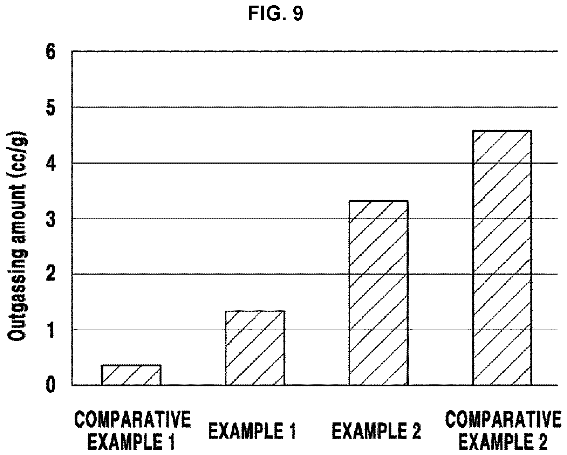

Each of the rechargeable lithium batteries of Examples and Comparative Examples were charged from 2.8 V to 5 V at a constant current of 0.2 C at 25 °C, and then cut off at 0.1 C in constant voltage mode. Here, the amount of outgassing in the battery per weight of the positive electrode active material was measured and results are shown in FIG. 9.

As shown in FIG. 9, it could be seen that the positive electrode active materials of the Examples had a higher amount of outgassing in the battery per weight of the positive electrode active material in an overcharge state than the positive electrode active material of Comparative Example 1. Accordingly, it was believed that the positive electrode active materials of the Examples could secure (e.g., ensure) safety by quickly activating a safety device in the event of overcharge.

### Evaluation Example 7: Free lithium content

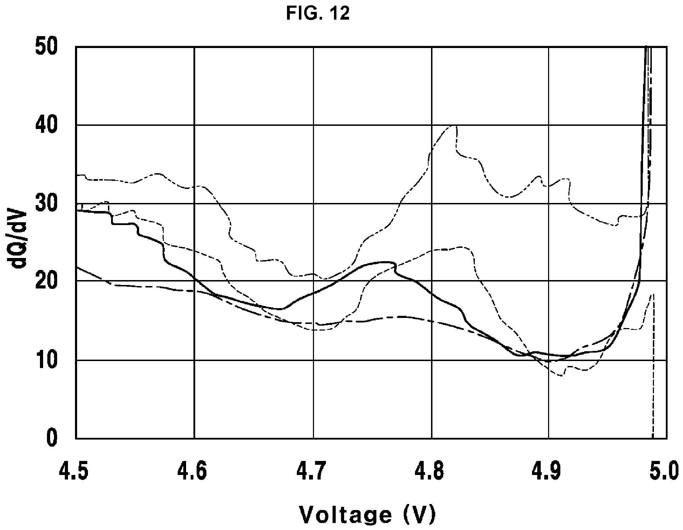

Free lithium (residual lithium) was evaluated for the positive electrode active materials of Examples and Comparative Examples. 100 g of deionized water was added to 10 g of a positive electrode active material sample, followed by stirring at about 250 rpm for 30 min. The resulting solution was filtered and then titrated using 0.1 M aqueous solution of hydrochloric acid. After titration, two inflection points were generated as shown in FIG. 12, and the content of free lithium was calculated by checking the added amount of the aqueous solution of hydrochloric acid at each inflection point. Results are shown in Table 1. As shown in Table 1, it could be seen that a higher content of the boron compound resulted in a higher free lithium measurement.

### Evaluation Example 8: Profile analysis evaluation upon overcharging from 2.8 V to 5 V

Each of the rechargeable lithium batteries of Examples and Comparative Examples was charged from 2.8 V to 5 V at a constant current of 0.5 C at 25 °C and cut-off at 0.1 C in constant voltage mode.

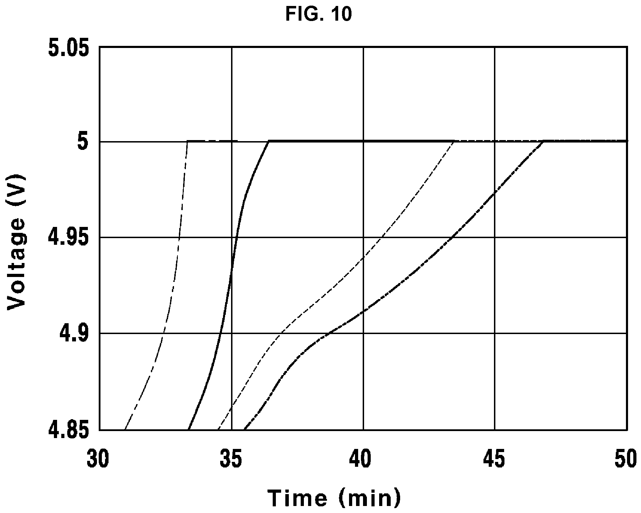

FIG. 10 shows a profile comparison of a time vs. voltage relationship during charging up to 5 V. It can be seen that, as the content of boron on the surface of the positive electrode active material increases, the profile curves are stretched in the region of 4.8 V or more, indicating occurrence of phase transformation and chemical reactions. An expected chemical reaction is production of O₂ gas and other gases due to chemical decomposition of the lithium-boron coating layer at high voltage. As the amount of chemical reaction increases and more gases are generated, the profile curves are further stretched in a flattened shape.

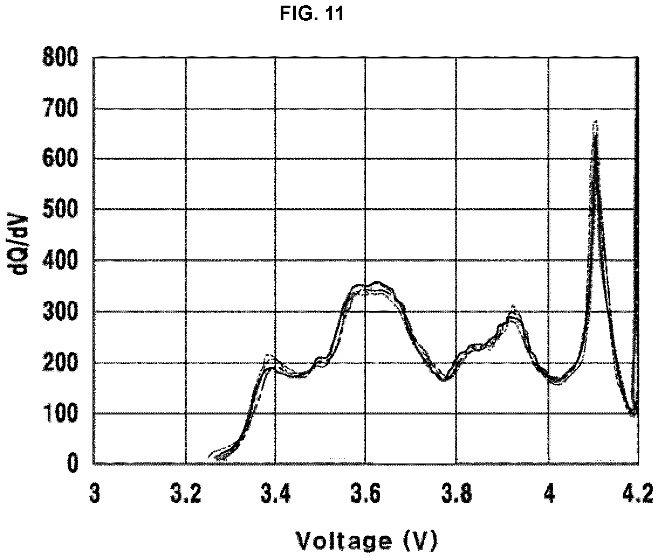

FIG. 11 and FIG. 12 are profiles of voltage (x-axis) vs. dQ/dV relationships during charging up to 5 V. In general, high Ni (Ni 80 or higher) positive electrode active materials show a flattened region in which curve stretching occurs, upon charging in the range of 4.1 V to 4.2 V, and have peaks generated in the dQ/dV graph. If (e.g., when) the peak in the corresponding region (4.1 V to 4.2 V) is set to I1 and a peak in the region of 4.7 V to 4.9 V, which occurs upon overcharge, is set to I2, a ratio (11112) of 20 or more satisfies optimal cobalt and boron coating conditions.

**Table 1**

| | Specific surface area (m²/g) | Charge capacity (mAh/g) | Discharge capacity (mAh/g) | Efficiency (%) | Free lithium content (ppm) | I1 | I2 | I1/I2 |
|---|---|---|---|---|---|---|---|---|
| Example 1 | 0.49 | 235.1 | 207.8 | 88.4 | 1486 | 579 | 22 | 26 |
| Example 2 | 0.58 | 235.4 | 208.9 | 88.7 | 1964 | 669 | 24 | 28 |
| Comparative Example 1 | 0.41 | 235.3 | 206.9 | 87.9 | 1213 | 549 | 15 | 37 |
| Comparative Example 2 | 0.76 | 234.8 | 207.1 | 88.2 | 2355 | 629 | 40 | 16 |

As used herein, the terms "use," "using," and "used" may be considered synonymous with the terms "utilize," "utilizing," and "utilized," respectively. As used herein, expressions such as "at least one of", "one of", and "selected from", when preceding a list of elements, modify the entire list of elements and do not modify the individual elements of the list. For example, "at least one selected from among a, b and c", "at least one of a, b or c", and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The use of "may" when describing embodiments of the inventive concept refers to "one or more embodiments of the inventive concept."

As used herein, the term "about," and similar terms are used as terms of approximation and not as terms of degree, and are intended to account for the inherent deviations in measured or calculated values that would be recognized by those of ordinary skill in the art. "About" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

Here, unless otherwise defined, the listing of steps, tasks, or acts in a particular order should not necessarily means that the invention or claims require that particular order. That is, the general rule that unless the steps, tasks, or acts of a method (e.g., a method claim) actually recite an order, the steps, tasks, or acts should not be construed to require one.

A battery manufacturing device, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

Although the present disclosure has been described with reference to some embodiments and drawings, it should be understood that the present disclosure is not limited thereto and various modifications, changes, alterations, and equivalent embodiments can be made by those skilled in the art without departing from the scope of the present disclosure as recited in the claims and equivalents thereof.

## Claims

1. A positive electrode active material for rechargeable lithium batteries, comprising:
a nickel-based active material;
a cobalt-containing coating layer on a surface of the nickel-based active material; and
a boron-containing coating layer on a surface of the cobalt-containing coating layer,
wherein the positive electrode active material has a specific surface area of 0.45 m²/g to 0.60 m²/g.

2. The positive electrode active material as claimed in claim 1, wherein the nickel-based active material is represented by Formula 1:
Llₐ(Ni_{1-x-y-z}CoₓM_{y}M'_{z})O_{2-δ},
where M is at least one selected from among Mn and Al;
M' is at least one element selected from the group consisting of boron (B), magnesium (Mg), calcium (Ca), strontium (Sr), barium (Ba), titanium (Ti), vanadium (V), chromium (Cr), iron (Fe), copper (Cu), zirconium (Zr), and aluminium (Al); and
0.95≤a≤1.3, x≤(1-x-y-z), y≤(1-x-y-z), z≤(1-x-y-z), 0<x<1, 0≤y<1, 0≤z<1, and 1.98≤2-δ≤2.

3. The positive electrode active material as claimed in claim 1 or claim 2, wherein the boron-containing coating layer is integrally formed with the cobalt-containing coating layer.

4. The positive electrode active material as claimed in any one of claims 1 to 3, wherein nickel is 70 mol% or more in amount based on a total 100 mol% of all metals excluding lithium in the positive electrode active material.

5. The positive electrode active material as claimed in any one of claims 1 to 4, wherein the nickel-based active material comprises a secondary particle through physical and/or chemical agglomeration of primary particles.

6. The positive electrode active material as claimed in claim 5, wherein the cobalt-containing coating layer is present on a surface of the secondary particle and at grain boundaries of the primary particles.

7. The positive electrode active material as claimed in any one of claims 1 to 6, wherein the nickel-based active material comprises at least one of (i) a first secondary particle, (ii) a single crystal structure particle, or (iii) a one-body particle.

8. The positive electrode active material as claimed in claim 7, wherein the nickel-based active material is a mixture of (i) the first secondary particle and (ii) the single crystal structure particle.

9. The positive electrode active material as claimed in claim 7 or claim 8, wherein (i) the first secondary particle is 60 parts to 90 parts by weight in amount and (ii) the single crystal structure particle is 10 parts to 40 parts by weight in amount, relative to 100 parts by weight of the mixture.

10. The positive electrode active material as claimed in any one of claims 7 to 9, wherein (i) the first secondary particle has a size of 14 µm to 18 µm and (ii) the single crystal structure particle has a size of 1 to 7 µm.

11. The positive electrode active material as claimed in any one of claims 1 to 10, wherein, if a peak in the region of 4.1 V to 4.2 V is referred to as I1 and a peak in the region of 4.7 V to 4.9 V is referred to as I2 in a dQ/dV profile upon charging from 2.8 V to 5 V, a ratio of I1/I2 is greater than or equal to 20.

12. The positive electrode active material as claimed in any one of claims 1 to 11, wherein the nickel-based active material comprises Li_{1.01}Ni_{0.8}Co_{0.1}Al_{0.1}O₂, Li_{1.01}Ni_{0.8}Co_{0.05}Al_{0.15}O₂, Li_{1.01}Ni_{0.8}Co_{0.15}Al_{0.05}O₂, LiNi_{0.95}Co_{0.04}Al_{0.01}O₂, or a combination thereof.

13. A method of preparing a positive electrode active material for rechargeable lithium batteries, the method comprising:
preparing a first positive electrode active material from a mixture comprising a nickel-based active material, a cobalt compound, and a solvent, the cobalt compound being wet-coated on a surface of the nickel-based active material;
preparing a second positive electrode active material by dry coating a boron compound on a surface of the first positive electrode active material; and
preparing a positive electrode active material for rechargeable lithium batteries by subjecting the second positive electrode active material to a heat treatment at 700 °C to 750 °C,
wherein boron from the boron compound is 0.25 mol% to 0.5 mol% in amount based on a total 100 mol% of transition metal elements in the nickel-based active material.

14. A positive electrode comprising the positive electrode active material as claimed in any one of claims 1 to 13.

15. A rechargeable lithium battery comprising:
a positive electrode comprising the positive electrode active material as claimed in any one of claims 1 to 13;
an negative electrode; and
an electrolyte.
